# EUROPEAN PATENT APPLICATION

(11) **EP 4 464 682 A2**
(43) Date of publication of application: **20.11.2024**
(21) Application number: 24202283.8
(22) Date of filing: 03.06.2020
(51) Int. Cl.: C05F 11/00

(54) **BIOMASS COMPOSITION COMPRISING INSECT PARTICLES, METHOD FOR PRODUCING THE SAME, AND USE OF SAID BIOMASS COMPOSITION**

(30) Priority: 07.06.2019 US 201962858348 P; 28.06.2019 NL 2023405
(62) Divisional of application: 20732332.0
(71) Applicant: Protix B.V., 5107 NC Dongen (NL)
(72) Inventor: Gillis, Jacobus Henricus Antonius Maria, 4835 BG Breda (NL); Wijts, Ramon René, 4191 HC Geldermalsen (NL)
(74) Representative: Nederlandsch Octrooibureau

(57) **Abstract**

The invention relates to a particulated biomass composition comprising insect particles or worm particles. The insect particles are for example derived from larvae such as fly larvae, in particular larvae of the species black soldier fly. The insect particles are for example provided by grinding insects. The biomass composition comprises for example ground grain and/or tuber parts of a root vegetable. Furthermore, the invention relates to such fertilizer, biofuel, feed, comprising the biomass composition.

## Description

### TECHNOLOGICAL FIELD

The invention relates to a biomass composition comprising insect particles or worm particles. The insect particles are for example derived from larvae such as fly larvae, in particular larvae of the species black soldier fly. The insect particles are for example provided by grinding or milling insects, e.g. by roller milling. The biomass composition comprises for example ground grain and/or tuber parts of a root vegetable. The invention also relates to a method for providing a biomass composition comprising insect particles or worm particles. In addition, the invention relates to the use of the biomass composition in the production of fertilizer, biofuel, animal feed. Furthermore, the invention relates to such fertilizer, biofuel, feed, comprising the biomass composition.

### BACKGROUND

Current farming of e.g. cows, poultry, pigs, provides not only food products such as milk, meat, eggs, but also valuable manure used for e.g. fertilizing soil applied for growing sources of feed for these farmed animals. In addition, the manure is applied as a fertilizer or an ingredient thereof, for culturing crops, vegetables, grain, fruit, trees, etc., for direct human consumption or use in e.g. construction, biodiesel production, etc. Now replacing at least in part current e.g. cattle-based or swine-based industrial-scale farming for large-scale industrial insect farming, may result in declining volume of manure produced. Shortage of manure as a source of fertilizer, or biomass for 'green' energy production, etc., is an effect of the switch to an insect-based product economy, which requires solutions.

Production of 'green' energy sources or carriers, such as methane produced from manure, biodiesel produced from vegetable waste, frying fat, biomass such as elephant grass, waste resulting from forestry, etc., bioethanol produced from sugar cane, sugar beetroot, etc., all rely on (declining) streams of waste from mass-farming of domestic animals, waste of food production, spilt food or feed, by-products of forestry, waste streams from e.g. agriculture and horticulture and breweries, by-products of slaughtering of farm animals, and/or use feedstock that could also be applied otherwise, for example in human food products, such that e.g. bioethanol production competes with supply of valuable sources of food for e.g. human. Declining supply of feedstock for production of biodiesel, bioethanol, (bio)methane (biogas) hampers the production of those energy carriers.

Power plants are fueled conventionally with fossil fuels such as natural gas and natural oil and coal. A current trend is to replace at least a fraction of the required amounts of fossil fuels with biomass such as wood, sawdust, waste remaining after processing of grains, etc. However, the demand for such biomass for mixing with fossil fuels is increasing and supply is limited.

Therefore, a need exist for a solution to at least one of these aforementioned problems relating to declining supply of manure for fertilizing purposes in e.g. agriculture, horticulture, forestry, and relating to a declining supply of manure for application as a source of biomass for e.g. biogas production, and relating to use of feedstock for e.g. bioethanol production, which feedstock could have an equally valuable destination, e.g. as a source of ingredients for food stuff for human consumption, and/or relating to the supply of biomass for application in a mix of fossil fuel and biomass for fueling a power plant.

### SUMMARY

Insects are considered one of the most promising means for protein and for organic residual recovery. Prominent examples of species proposed for the indicated applications include the black soldier fly (*Hermetia illucens*), the house fly (*Musca domestica*), and the mealworm (*Tenebrio molitor L*.).

It is an object of the current invention to provide a solution to at least some of the aforementioned drawbacks of migration from industrial scale mass-rearing of livestock, and consumption of the products derived therefrom to alternative approaches of farming for the purpose of satisfying the demand for e.g. proteins, fats. In addition, it is an object of the invention to provide a solution to at least some of the aforementioned drawbacks of production of green energy production. Furthermore, it is an object of the invention to provide a solution to at least some of the aforementioned drawbacks of fueling e.g. power plants with at least a percentage of biomass with regard to the total mass of used fossil fuel.

In a first aspect of the invention this object is achieved by the provision of a biomass composition comprising insect particles or worm particles and a vegetable biomass according to the invention.

In a second aspect of the invention, this object is achieved by the provision of a method for providing a biomass composition comprising insect particles or worm particles and a vegetable biomass, comprising the steps of:
a. providing a mixture comprising insects and vegetable biomass;
b. providing a corrugated roller mill for milling grain;
c. subjecting the mixture comprising insects and vegetable biomass of step a. to a feeder of the mill of step b, and milling the mixture such that the biomass composition is obtained. The biomass composition provided with the method of the invention is suitable for applications addressing at least part of the aforementioned problems.

The solution(s) to at least some of the aforementioned problems relating to e.g. livestock farming, production of green energy, fueling power plants with biomass, provided by the current inventors coincide with the opportunity to apply said solutions in industrial scale insect farming, such that application of the solutions to the aforementioned problems relating to e.g. livestock farming, production of green energy, fueling power plants with biomass coincides with overcoming at least to some extent currently existing problems relating to hampering upscaling of small scale insect breeding to industrial insect farming. Application of the biomass composition of the current invention thus allows for and at least contributes to scaling up of the breeding of insects, to a scale that is economically feasible.

Therefore, the current inventors thus now also developed methods and means contributing to improving the efficiency of insect farming relating to improvements in consumption of resources required for industrial scale insect farming, waste management with regard to the hygiene at the farm and with regard to containment of the risk for treats to the health of human, animal, plants and to the environment, circularity of the insect breeding, etc., contributing to the feasibility of at least partly switching from current livestock-bred based consumption of meat derived from e.g. cow, horse, goat, sheep, pig, poultry, fish, to consumption of insect-based products such as proteins and oil.

In a third aspect of the invention this object is achieved by the use of the biomass composition according to the invention or by use of the biomass composition obtained with the method of the invention, in the production of a feed, a feed stuff, a feed ingredient, a biofuel such as biogas, biodiesel, bioethanol, a fertilizer, an ingredient for a fertilizer, a construction material, a biomass comprising fuel for fueling a power plant.

In a fourth aspect of the invention this object is achieved by provision of a biomass comprising fuel for fueling a power plant, the biomass comprising fuel comprising the biomass composition according to the invention or obtained with the method of the invention.

In a fifth aspect of the invention this object is achieved by provision of a feed or feed ingredient comprising the biomass composition according to the invention or obtained with the method of the invention.

Large-scale breeding and rearing of insects results as a by-product in a stream of waste, dead insects, insects that lost their economic viability or value, spoilt insect feed, excrements, faeces, etc. Similar to current mass-farming of livestock, e.g. cows, pigs, chicken, such waste relating to insect farming has to be discarded from the insect breeding/rearing area at the farm. Since streams of waste resulting from mass-production of insects often may contain a fraction of insect-derived matter or even complete insects (dead or alive), such waste has to be treated according to the applying stringent regulations enforced by (national, European, otherwise) authorities concerned. For example, in the countries of the European Union, including the Netherlands, disposal, processing and destruction of farm waste comprising living animals, animal carcasses and animal residual material is strictly regulated and encompasses for example full destruction of the carcasses, such as by incinerating the animal remains. Regarding industrial large-scale insect farming, such regulations hamper optimal insect farming conditions, since measures at the farm have to be taken to collect and store, such as by cooled storage, and discard insect carcasses according to current regulations. Adapting to such tight regulations for disposal of animal carcasses and animal remains, is further troublesome for the industrial insect farming since dead insects such as larvae are often presented as a fraction of a mixture such as feed substrate comprising insects such as larvae. Presenting solely insect carcasses to the authorities is thus hampered and requires separation steps and cleaning steps, which may introduce a local risk at the farm for contamination, infection, etc. due to the local processing of such waste material. Due to the size of insects, the volume or mass of insects carcasses to be disposed and destructed on e.g. a daily, weekly or even monthly basis, may relatively be limited, compared to current farming of e.g. poultry, swine, goat, though still proper and efficient waste management in a timely manner on the farm when dead insects are considered is important, in view of containment and management of risks for e.g. infection, odor nuisance, etc. However, immediate disposal of insect waste, e.g. on a day by day basis, induces high costs for collection, transportation, and destruction, due to the relatively small waste volumes when the isolated insect carcasses are considered.

The inventors now surprisingly established that processing live and dead insects (at the farm), which are occurring as waste during mass-farming of insects, or which are a by-product of certain insect breeding steps, in the context of a feed substrate, i.e. a vegetable biomass, such that a biomass composition comprising insect particles is provided, not only provides an approach for efficient and efficacious waste management at the industrial-scale insect farm or insect breeding factory, both from a labor perspective, time consumption perspective and efficient use and re-use of resources perspective, but at the same time provides for both valuable supply of raw biomaterial or even as-is ready-to-use end-product biomass material, for e.g. fertilization purposes, fueling power plants, producing green energy, and allows for relatively unencumbered disposal of said processed biomass.

### DEFINITIONS

The term "ambient" has its regular scientific meaning and here refers to that what is surrounding something. Ambient air thus refers to the air surrounding the live insects transport device, according to the invention.

The term "insect" has its regular scientific meaning and here refers to all stages of an insect, e.g. embryo, imago, egg, pupae, adult insect, neonate larvae, larvae, prepupae. Moreover, for the sake of conciseness, the term insect also relates to arthropods in general, including flies such as black soldier fly, and including mites, unless stated otherwise or when it is clear from the context that the regular scientific meaning is referred to. The term insects in the context of the invention may refer to arthropods, mites, flies, and to black soldier fly (*Hermetia illucens*), in particular the larval stage thereof, house fly (*Musca domestica*), mealworm (*Tenebrio molitor L*.), Lacewings (e.g. *Chrysoperla carnea*), Coccinelid beetles (e.g. *Cryptolaemus montrouzien*), any species of predatory bugs (e.g. *Macrolophus pygmaeus*)*,* other insects, such as pollinators (e.g. the onion fly, *Delia antiqua*) and any species of predatory beetles (e.g. the greenhouse rove beetle, *Dalotia coriaria*), as well as terrestric fly species.

The term "particle" has its regular scientific meaning throughout the current text and here refers to a small localized object to which can be ascribed several physical or chemical properties such as volume, density or mass. In the context of the invention, with particle, macroscopic particles are referred to. In the context of insect particles and particulate insects, the term particles indicate fragmented insects, parts of insects such as heads, wings, legs, body parts, skin, thorax, abdomen, the intestine, (chitin) exoskeleton (parts), cut insects, smashed insects, freeze-dried insects or parts thereof, decomposed insects, disintegrated insects, dried out insects such as obtained after heating dead insects, remains after incinerating insects, etc. and also deformed insects, distorted insects, e.g. upon compressing, hammering, milling, etc. the insects, egg shell, egg content, etc.

The term "particulate" has its regular scientific meaning throughout the current text and here refers to something that is composed of particles, such as particulate insects, particulate larvae of insects, particulate grain, flour, milled insects.

The term "biomass" has its regular scientific meaning throughout the current text and here refers to plant material or animal material, e.g. used for (green) energy production, heat production, or used in various industrial processes as raw material for products. Biomass can be purposely grown energy crops (e.g. miscanthus, switchgrass), wood or forest residues, waste from food crops (wheat straw, bagasse), horticulture (yard waste), food processing (corn cobs), animal farming (manure, rich in nitrogen and phosphorus), or human waste from sewage plants.

The term "vegetable biomass" has its regular scientific meaning throughout the current text and here refers to biomass that is plant material such as grass, wood, wheat, grain in general, rice, potato, sugar cane, fruit, crops, vegetables, root vegetables, beet, carrot, etc.

A sieve analysis (or a gradation test) is a practice or procedure used to assess the particle size distribution (*gradation*) of a granular material (particulate material) by allowing the particulate material to pass through a series of sieves of progressively smaller mesh size, and weighing the amount of particulate material that is retained by each individual sieve as a fraction of the whole mass (as executed according to ASTM C136/C136M-14 Standard Test Method for Sieve Analysis, the version of the standard as published in the "Book of Standards", Volume 04.02, with last changes approved by ASTM at 1 December 2014).

The term "live" has its regular scientific meaning and here refers to an organism that is in a healthy condition and that has a normal average life expectation.

The term "green energy" has its regular scientific meaning and here refers to sustainable energy relating to the principle that human use of energy meets the needs of the present without compromising the ability of future generations to meet their own needs. Typically, green energy refers to energy derived from or produced with the aid of hydropower, geothermal, biomass and biofuel, wind, solar heating, solar electricity, ocean energy, enabling technologies for variable renewable energy.

The term "biofuel" has its regular scientific meaning and here refers to a fuel that is produced through contemporary processes from biomass, rather than a fuel produced by the very long-winded geological processes involved in the formation of fossil fuels, such as oil, char coal, fossil gas.

The term "corrugated" in the context of a roller has its regular scientific meaning and here refers to a series of parallel ridges and furrows on the outer surface of a roller.

The term "fluting" or "fluted" in the context of a roller has its regular scientific meaning and here refers to grooves running vertically on a column, i.e. the outer surface of a roller.

The term "spiral of flute" in the context of a roller has its regular scientific meaning and here refers to the angle of inclination of the flute to the horizontal line on the surface of the roll.

The term "particulated" has its regular scientific meaning and here refers to a substance or compound or agglomerate or grain or particle being made particulate by means of exerting any force, pressure, etc. on the substance, etc.

### BRIEF DESCRIPTION OF THE DRAWINGS

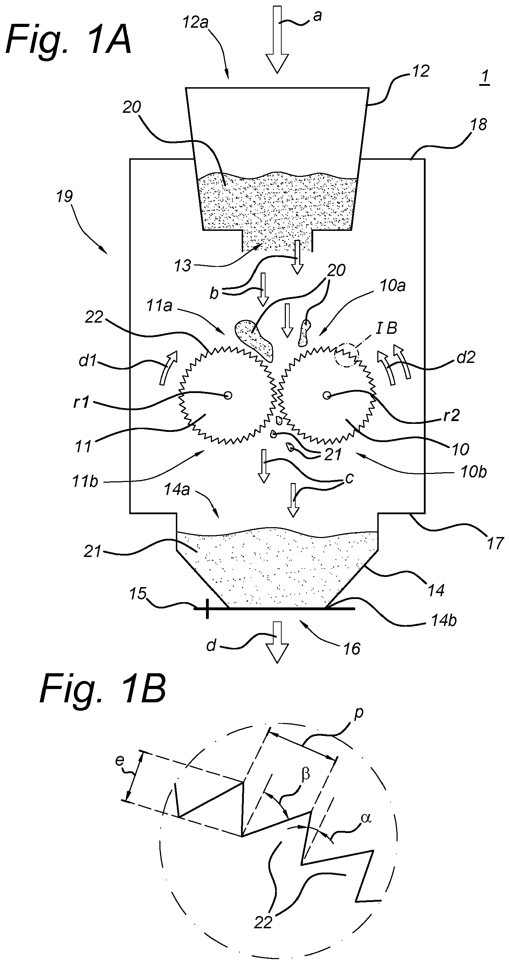

Figure 1A (Fig. 1A) displays a roller mill comprising a single set of corrugated rollers, a container for receiving raw material bio-waste and a container for receiving ground bio-waste, milled by the roller mill.
Figure 1B (Fig. 1B) displays a detail of the surface of a corrugated roller of the roller mill shown in Figure 1A, the corrugated roller being a corrugated fluted roller with non-symmetrical teeth, wherein the cutting angle is smaller than the back angle.

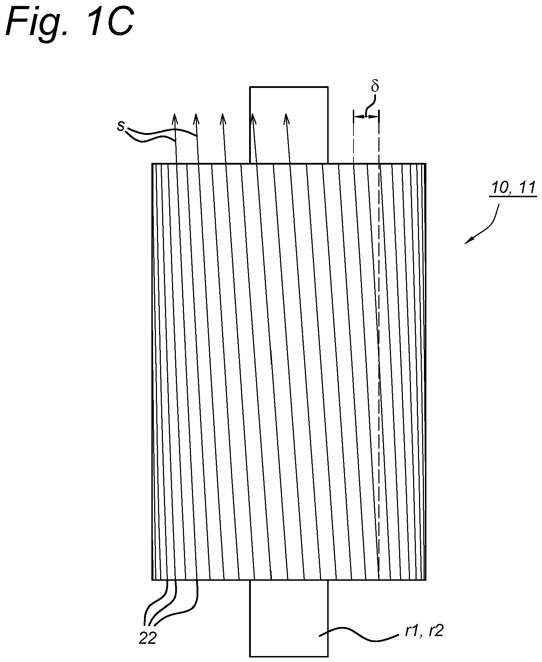

Figure 1C (Fig. 1C) shows a top view of a corrugated fluted roller of the roller mill displayed in Figure 1A, showing the roller axis and the spiral of the flute of the corrugated roller.

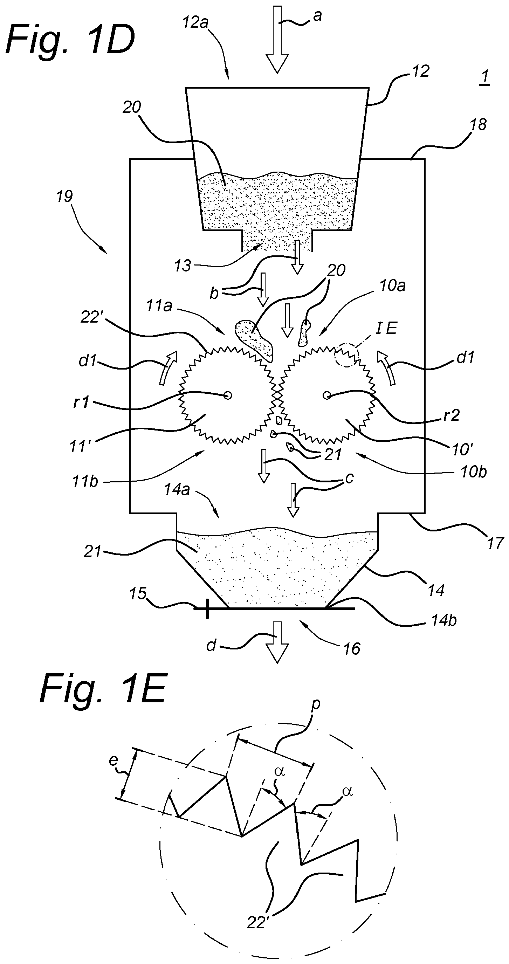

Figure 1D (Fig. 1D) shows a variant to the roller mill displayed in Fig. 1A, the roller mill comprising a set of corrugated rollers wherein the rollers comprise straight parallel running flutes without a spiral.
Figure 1E (Fig. 1E) displays a detail of the surface of a corrugated roller of the roller mill shown in Figure 1D, the corrugated roller being a corrugated fluted roller with symmetrical teeth, wherein the cutting angle and the back angle are essentially the same.

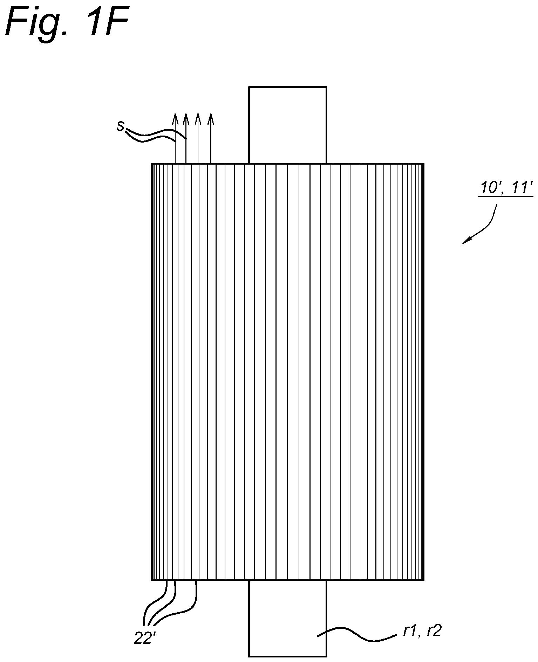

Figure 1F (Fig. 1F) shows a top view of a corrugated fluted roller of the roller mill displayed in Figure 1D, showing the roller axis and the straight parallel running flutes without spiral, at the corrugated roller surface.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Unless defined otherwise, all technical terms and scientific terms used herein have the same meaning as commonly understood by the relevant skilled person. Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The embodiments of the invention described herein can operate in combination and cooperation, unless specified otherwise.

Furthermore, the various embodiments, although referred to as "preferred" or "e.g." or "for example" or "in particular" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

An aspect of the invention relates to a biomass composition comprising insect particles or worm particles and a vegetable biomass.

An embodiment is the biomass composition of the invention, wherein the vegetable biomass is one or more of a grain or a constituent thereof, a tuber of a root vegetable or parts or a constituent thereof, wood such as saw dust, shredded branches, a fruit, a vegetable, a crop, a plant, or a fragment, constituent or part thereof.

An embodiment is the biomass composition according to the invention, wherein the grain is one or more of wheat, maize, corn, soy, brain, rice, and/or wherein the tuber of a root vegetable is one or more of potato, cane, beet, carrot. Of course, other grains, vegetables, plants, roots, (parts) of trees, seeds, etc., which are suitable for providing particulate grains, vegetables, plants, (parts of) trees, seeds, are equally suitable as a source of the vegetable biomass. The inventors established that in particular the provision of a biomass composition of the invention comprising particulate insects and vegetable biomass is suitable for application of said biomass composition in agriculture, green energy production, etc., when the insects are (mature) larvae of insects such as mature larvae, e.g. 15-20 days of age, of black soldier fly, combined with a (particulate) grain and optionally a (particulate) tuber of a root vegetable.

An embodiment is the biomass composition according to the invention, wherein the vegetable biomass comprises ground grain and/or flour of a grain, such as wheat, maize, corn, soy, brain, rice, and/or wherein the vegetable biomass comprises a tuber of a root vegetable such as one or more of beet, potato and carrot, wherein said tuber of a root vegetable is preferably provided in parts for example any one or more of particulated, smashed, ground, sliced, milled, and chopped tuber of a root of a root vegetable.

An embodiment is the biomass composition according to the invention, wherein the insect particles have an average particle size of between 0,1 mm and 4 mm, preferably 0,2 mm - 2 mm, more preferably 0,5 - 1 mm, the average particle size determined with ASTM C136/C136M-14 Standard Test Method for Sieve Analysis (version 1 December 2014), and/or wherein the vegetable biomass comprises parts of a tuber of a root vegetable according to claim 4, with an average particle size of between 0,1 mm and 4 mm, preferably 0,2 mm - 2 mm, more preferably 0,5 - 1 mm, the average particle size determined with ASTM C136/C136M-14 Standard Test Method for Sieve Analysis. An embodiment is the biomass composition according to the invention, wherein the insect particles have an average particle size of between 3 mm and 40 mm, preferably 5 mm - 30 mm, more preferably 8 - 20 mm, the average particle size determined with ASTM C136/C136M-14 Standard Test Method for Sieve Analysis (version 1 December 2014) , and/or wherein the vegetable biomass comprises parts of a tuber of a root vegetable according to the invention, with an average particle size of between 3 mm and 40 mm, preferably 5 mm - 30 mm, more preferably 8 - 20 mm, the average particle size determined with ASTM C136/C136M-14 Standard Test Method for Sieve Analysis.

Alternatively, the average particles size of 3 mm - 40 mm can be determined using conventional means for measuring the length, breadth, height of a macroscopical particle like the ground insect particles. For example, the size of the insect particles having a size range of 3 mm - 40 mm (length, breadth, height) is measured using a(n) (electronic) caliper or ruler. For example, the insects are mature larvae, such as larvae of black soldier fly. For example, such larvae have an average size of about 20 mm (length) and about 5 mm cross section), before transferring such intact larvae, e.g. live larvae, into particulate larvae. For example, the larvae particles in the biomass composition of the invention, such as black soldier fly mature larvae (e.g. 14-23 days of age), have a length of 8 mm - 23 mm, a breadth of 4 mm - 7 mm and a height of 0,4 mm - 3 mm. Typically, when the insect particles comprising by the biomass composition of the invention are black soldier fly larvae particles, at least the size of a fraction of such particles is for example 17 mm - 22 mm times 5 - 6 mm times 1 mm - 2 mm. In addition, optionally, a further fraction of the insect particles is provided as particulate larvae having a smaller average size such as particles with an average size of 50 micrometer - 500 micrometer. This further fraction is for example provided as particulate intestine of insects such as intestine of larvae such as black soldier fly larvae.

An embodiment is the biomass composition according to the invention, wherein the insect particles have an average particle size of between 3 mm and 40 mm, preferably 5 mm - 30 mm, more preferably 8 - 20 mm.

An embodiment is the biomass composition according to the invention, wherein the insect particles have an average particle size of 10 mm - 40 mm times 3 mm - 10 mm times 0,4 mm - 4 mm.

An embodiment is the biomass composition according to the invention, wherein the insect particles comprised by the biomass composition comprise or consist of black soldier fly larvae particles, these particles having an average size of 17 mm - 22 mm times 5 mm - 6 mm times 1 mm - 2 mm.

Insect particles having a size or sizes within these ranges in the biomass composition are sufficiently small for allowing disposal of the biomass composition as e.g. non-slaughterhouse waste which does not pose a threat to the environment or to humans, when the environment or humans are contacting the biomass composition. Thus, according to the invention, the particle size of the insects particles comprised by the biomass composition, is such that the biomass composition does not pose a health risk to a human subject when the human subject is contacting the biomass composition. Furthermore, due to the (small) size of the insect particles in the biomass composition, the biomass composition is graded as non-hazardous material under for example European Union regulation. This allows for disposal of the biomass composition without the requirement of cumbersome and cost-intensive safety measures. In addition, due to the size of the insect particles relative to the size of the intact whole insects such as larvae of the black soldier fly, the biomass composition is suitable for use as for example fertilizer, bio-fuel, etc. It is due to the selected combination of water content of the biomass composition and the relative amount of insect particles based on the weight of the biomass composition, that biomass composition is surprisingly provided by the method of the invention, the biomass composition with insect particles having particle sizes within these ranges. Typically, the water content is 10% - 65% by weight based on the mass of the biomass composition, such as about 50%. The method of the invention is surprisingly suitable for grinding larvae of black soldier fly to insect particles having sizes within these size ranges, typically when the water content of the biomass composition is 10% - 65% by weight based on the mass of the biomass composition.

An embodiment is the biomass composition according to the invention, wherein the vegetable biomass comprises milled grain, particulate grain or grain flour, with an average particle size of between 0,1 mm and 4 mm, preferably 0,2 mm - 2 mm, more preferably 0,5 - 1 mm, the average particle size determined with ASTM C136/C136M-14 Standard Test Method for Sieve Analysis (version 1 December 2014). Such fine grain particles, similar to consumer flour or milled grain provided as feedstock for rearing pigs, contributes to efficient application of the biomass composition as e.g. biofuel in a power plant, as a fertilizer in horticulture, and for example as a feed ingredient in the provision of feed for rearing insects such as the insects that are comprised in particulate form in the biomass composition. E.g. rearing of black soldier fly larvae delivers a source of bio-waste, i.e. living and dead mature larvae in feed substrate from which most of the larvae are harvested (e.g. 90%-99,9% of the number of larvae reared in a container comprising the feed substrate, the feed substrate consisting of a mixture of grains, a single grain, a mixture of grains and potato and/or beet, etc.). Such bio-waste is milled or ground such that a mixture of feed substrate comprising particulate larvae is provided, which mixture is a biomass composition according to the invention. Typically, the particulate black soldier larvae applied in the biomass composition of the invention comprises larvae skin, (particulate) larvae intestine, compressed and/or deformed larvae, such compressed and deformed larvae typically lacking their intestine. For example at least a fraction of particulate larvae (insect particles) is present as flat 'ghost' larvae, lacking intestine and having a flat, deflated appearance due to the fact that intestine are previously pushed out of the skin.

An embodiment is the biomass composition according to the invention, wherein the biomass composition further comprises a liquid such as water, preferably 10% - 60% water by weight of the biomass composition, more preferably 20% - 50% by weight, most preferably 30% - 45% by weight. A source of such a biomass composition comprising for example 35% - 40% water by weight of the composition, is for example a feed substrate comprising vegetable feed ingredients such as a grain, a crop, a potato, a beet, etc., that was previously applied in (mass-)rearing of insects, such as larvae, typically of black soldier fly, the feed substrate being enriched with insects, such as larvae. Such larvae are dead or alive or a combination of dead and alive, and in addition to such larvae, for example also larvae skins are present. In order to provide a biomass composition of the invention, such a wet feed substrate comprising larvae is subjected to a particulization step such that insect particles are provided in the context of e.g. grain flour (grain particles) and water. The particulization step typically involves grinding and milling, such as milling using a roller grinder, e.g. a corrugated roller mill.

An embodiment is the biomass composition according to the invention, wherein the biomass composition further comprises a liquid such as water, preferably 1% - 10% water by weight of the biomass composition, more preferably 2% - 8% by weight, most preferably 3% - 6% by weight. Such a biomass composition of the invention has typically previously been subjected to a drying or lyophilization step for discarding moisture and lowering the water content of the initially provided biomass composition of the invention. Such a low-water content biomass composition is for example previously subjected to a heating step, such that water present evaporated, providing a biomass composition with e.g. a water content of 4%-5% by weight of the biomass composition. Drying of a biomass composition of the invention for evaporating or discarding at least part of the initial moisture content is for example established using procedures such as air drying, refractive drying, heating, etc., known in the art.

Preferred is the biomass composition according to the invention, wherein the insect is an insect larvae, such as a larvae of black soldier fly. Typically, the larvae are mature larvae, meaning that such larvae are at an age and stage of development shortly before turning into prepupae. Such mature larvae are at their maximum size and contents of valuable compounds such as fats and proteins is maximal. Such mature larvae of black soldier fly have e.g. a high nutritional value, a high oil content, mineral content, an amino acid composition beneficial for application of the larvae as a source of feed ingredient for e.g. rearing larvae of the very same species of black soldier fly, or larvae of another arthropod. When larvae such as black soldier fly mature larvae are considered, the biomass composition of the invention typically comprises particulate intestine of black soldier fly larvae and/or bodies of such larvae lacking the intestine.

An embodiment is the biomass composition according to the invention, wherein the biomass composition comprises any one or more insect particles selected from one or more of particulate insect excrements, insect faeces, insect skin, insect eggs, insect egg shells, insect pupae, insect prepupae, insect imago, adult insect, insect embryo, mature larvae, insect intestine, chitin exterior skeleton, wings, legs, heads, thorax, abdomen. Any of these parts, fragments, etc. either alone or in combination with further parts, fragments, particles listed, provide in combination with the vegetable biomass a source of fertilizer, fuel for a power plant, a feed ingredient for rearing e.g. insect larvae, a feed ingredient for manufacturing of feed for livestock, etc.

An embodiment is the biomass composition according to the invention, wherein the biomass composition comprises 0,01% - 25% insects by weight of the biomass composition, preferably 0,5% - 20% by weight, more preferably 1%-15% by weight, most preferably 2%-10% by weight, wherein the insects preferably are larvae of black soldier fly. For example, when the vegetable biomass is at least a grain optionally mixed with potato and/or (parts, particles of) beet, the content of insect fragments on a mass/mass basis is 0,8% - 3,5% insects based on the total weight of the biomass composition. Typically, the insects are larvae such as mature black soldier fly larvae at an age of 10-25 days or at a stage less than 72 hours before transformation into prepupae, preferably less than 48 hours, more preferably less than 24 hours, most preferably less than 12 hours. This way the particulate larvae enrich the vegetable biomass in the biomass composition of the invention optimally with e.g. lipids, fats, proteins, etc.

An embodiment is the biomass composition of the invention, wherein the biomass composition further comprises a liquid such as water at an amount of 0,5% -60% based on the weight of the biomass composition, preferably 1% - 40% water by weight of the biomass composition, more preferably 2% - 30% by weight, most preferably 3% - 20% by weight.

An embodiment is the biomass composition of the invention, wherein the biomass composition further comprises a liquid such as water at an amount of 0,5% - 70% based on the weight of the biomass composition, preferably 1% - 65% water by weight of the biomass composition, more preferably 2% - 30% by weight, most preferably 3% - 20% by weight, such as 5% - 70% and 10% - 65%.

An embodiment is the biomass composition of the invention, wherein the biomass composition further comprises a liquid such as water, preferably 10% - 60% water by weight of the biomass composition or 10% - 65% by weight, more preferably 20% - 50% by weight, most preferably 30% - 45% by weight. Typically, the liquid in the biomass composition is water. Typically, the water content of the biomass composition is between 10% and 35% based on the weight of the biomass composition, such as about 50%.

An embodiment is the biomass composition of the invention, wherein the biomass composition has a dry matter content of 20% - 99% by weight of the biomass composition, preferably 25% - 97% by weight, more preferably 30% - 95% by weight, most preferably 35% - 90% by weight. Typically, the dry matter content of the biomass composition is between 35% and 90% based on the weight of the biomass composition, such as about 50%.

An embodiment is the biomass composition of the invention, wherein the insect is an insect larvae, such as a larvae of black soldier fly, such as black soldier fly larvae 10-20 days of age post-hatching.

A second aspect of the invention relates to a method for providing a biomass composition comprising insect particles or worm particles and a biomass, comprising the steps of:
a. providing a mixture comprising insects and a biomass;
b. providing a roller mill for milling grain;
c. subjecting the mixture comprising insects and biomass of step a. to a feeder of the mill of step b, and milling the mixture such that the biomass composition is obtained.

The roller mill is preferably a corrugated roller mill. Even more preferred is the method of the invention wherein a corrugated fluted roller mill is applied. It is preferred that the flutes at the surface of the corrugated rollers are spiral flutes (see also Figure 1C), although corrugated rollers having straight running parallel flutes are also applicable in the method of the invention (see also Figure 1F). Such roller mills are known in the art of grain milling. The inventors now established that surprisingly, a mixture of insects and for example a grain and optionally further grain(s) and/or potato and/or beet, is efficiently milled and ground when fed to a roller mill such as preferably a corrugated roller mill. Although a corrugated roller mill designed for and thus suitable for grinding and milling of dry products with a moisture content of typically 15% by weight of e.g. a grain, typically 14% or less, such as grains such as wheat and corn and maize and rice, is applied in the invented method, still efficient milling of the mixture of at least insects and a biomass is established.

Surprisingly, the feed stock applied for the provision of the biomass composition of the invention, i.e. a relatively wet mass of live and dead insect larvae and grain and optionally potato or beet (moisture content typically at least 40% by weight of the total mass of the feed stock), was efficiently ground using a corrugated roller mill for relatively dry grain (moisture content typically 14% or less based on the total weight of the grain), without rollers becoming wetted, clogged, stuck by smears of (partly) ground material or unground feed stock material, etc. The roller millers could be running and grinding for hours to days, processing (milling) tons of larvae/grain, uninterrupted and without any difficulties relating to hampered grinding. In contrast, the inventors established that methods and apparatuses that are specifically designed for particularization, milling, grinding, slicing, etc., of feed stock with a relatively high moisture content similar or higher than the moisture content of the feed stock for producing the biomass composition of the invention, were not suitable for provision of the biomass composition of the invention. That is to say, for example a conventional pelletizer, a conventional multi-cracker, a conventional crusher, a conventional pin mill, a conventional screw press, a conventional meat mincer, and a conventional hammer mill, all known in the art, all proved to be unsuitable for particulization of the feed stock applied in the method of the invention for provision of the biomass composition of the invention. See also the Examples section here below for further details on these failures with regard to the application of these particulization techniques known in the art. The most common drawback of these methods and means for particulization of matter, other than corrugated roller mills for grain, was the clogging of the means for cutting, hammering, slicing, etc., by the particles in the feed stock and/or by (partly) processed feed stock, relating to the moisture content of the feed stock that turned out to be apparently too high for suitable application of these particulatization methods tested other than corrugated roller milling.

The biomass comprised by the mixture of step a. of the method is preferably a vegetable biomass or a plant-based biomass. Although a biomass such as cattle manure, poultry manure, swine manure, an organic biomass relating to dairy or constituents thereof, derived from egg, meat, whole animal, fish, etc., may also suffice for providing a suitable mixture of insects and a biomass of step a. of the method. The inventors tested mixtures of insect larvae, either dead or alive or a mixture thereof, optionally mixed with larvae skin, and a vegetable biomass, for the provision of the mixture of step a. of the method, and found out that such mixtures provided a stable, free flowing biomass composition upon step c. of the method.

An embodiment is the method of the invention, wherein the insects of step a. are larvae, preferably larvae of black soldier fly. Typically, according to the invention, the insects are a mixture of dead and alive mature larvae of black soldier fly, or any other source of larvae. Equally preferred is a source of insects consisting of dead insects only, or alive insects only, such as black soldier fly larvae between 10 days of age and 23 days of age, preferably between 15 days of age and 23 days of age, such as 10- 16 days of age.

An embodiment is the method of the invention, wherein the vegetable biomass of step a. comprises at least one of a particulate grain such as ground grain or flour and tuber particles of a root vegetable such as potato, beet, carrot, preferably at least one ground grain or a mixture of at least one ground grain and particulate potato or tuber particles of beet. Mixing such as vegetable biomass with insects provides a mixture that demonstrated to be particularly suitable for efficient and unencumbered milling of the mixture by applying a (corrugated) roller mill. That is to say, tons of the mixture are millable in a semi-continuous milling process or in a batch wise milling cycle, providing tons of biomass composition, i.e. the biomass composition of the invention, without the roller mill becoming for example clogged upon adherence of tacky and sticky particulate insects. Clogging of a roller mill such as a corrugated roller mill, during operation is a common problem encountered when milling e.g. pastes, crops, vegetables, etc., which have a water content of over 15% by weight of such biomass product. Typically, long runs of grinding and milling are performed with a mixture of grains and insects such as larvae, using a (corrugated) roller mill in the method of the invention, without the need for a cleaning step, necessary due to building up of a smear of product at the roller surface. The inventors established that a mixture of insects and vegetable biomass is highly suitable for roller milling providing a flour comprising particulate insects, for example when the vegetable biomass comprises a grain and for example when the insects in the mixture comprise mature larvae, apart from e.g. insect skin, insect fragments.

An embodiment is the method of the invention, wherein in step b. the corrugated roller mill is a mill comprising fluted rollers. Particularly good results with regard to the turnover of the milling process in tons per hour and with regard to the avoidance of clogging of the roller miller during operation, were observed when such a corrugated fluted roller miller was applied. When the insects were black soldier fly mature larvae, and when the biomass was a vegetable biomass such as a grain such as wheat, optionally mixed with potato or beet (parts, particles), with a conventional corrugated roller miller, a turnover of up to 5,5 tons per hour was achieved by using the method of the invention. Such a conventional corrugated (fluted) roller miller typically has two rollers with a length of about 80 cm to 200 cm, preferably 100 cm - 150 cm, such as a roller miller with corrugated fluted rollers with a length of 100 cm or 150 cm, although rollers with a length over 200 cm are also suitable for use in the method of the invention; a roller diameter of between 20 cm and 40 cm, typically about 25 cm, and a processing capacity when a grain with a moisture content of typically about 14% by weight of the grain is considered, of 8-25 tons/hour when the rollers have a length of 100 cm and a diameter of 25 cm. In the method of the invention, beneficially use is made of a corrugated fluted roller miller, comprising fluted corrugations having a cutting angle alpha of about 20°-45°, such as about 32°, a back angle beta of about 55° to 75°, typically about 65°, an angle sum of 75°-130°, a number of corrugations of 2/cm - 4/cm, wherein the depth of the (fluted) corrugations is 0,75 mm to 1 mm (see also Figure 1A-C). Preferably, the corrugations are twisted corrugations, wherein the fluted roller has corrugations with a twist or spiral over the surface of the rollers of typically 6% - 12%. Although straight running parallel corrugations, wherein the fluted roller has corrugations without a twist or spiral over the surface of the rollers is also applicable for the method of the invention (Fig. 2E-F). The speed differential between the two rollers of the corrugated roller miller applied in the method of the invention is typically between 1:1 (Fig. 1D) and 1:2,5 (Fig. 1A), such as 1:1,2, 1:1,5 or 1:2. When applying such a speed differential between the speed of the first roller and the speed of the second roller (i.e. the two rollers are running at a different speed in rpm) when applying a corrugated roller miller for grinding the mixture of step a, the turnover of up to 5,5 tons/hour was achieved with regard to the production of the biomass composition. The distance between the two fluted rollers was typically between 0,7 mm and 1,7 mm, preferably about 1 mm, for good results with regard to avoidance of clogging and avoidance of adherence of a smear of insects remains such as intestine of larvae onto the surface of the corrugated rollers, when the mixture of step a. of the method comprises carcasses of mature larvae, e.g. black soldier fly larvae, and/or live insects such as mature larvae.

With the method of the invention, for example mature larvae of black soldier fly having a length of about 20 mm and a cross section of about 5 mm, either alive or dead or a mixture thereof, provided as a mixture of larvae and larvae feedstock comprising at least one ground grain, are milled into particulate larvae with typical dimensions of 10-21 mm length, 4-6 mm breadth and 0,5-3 mm height for the carcasses that are emptied from the intestine upon the milling, and the intestine particles pressed out of the interior of the larvae bodies, wherein such intestine particles have a smaller average dimension than the particulate larvae such as an average particle size of between 0,01 mm and 0,9 mm, preferably 0,02 mm - 0,8 mm, more preferably 0,05 - 0,6 mm, the average particle size determined with ASTM C136/C136M-14 Standard Test Method for Sieve Analysis (version 1 December 2014). Alternatively, the average particle size can be equally conveniently determined using a conventional (electronic) ruler or a conventional (electronic) caliper known in the art. The biomass in step a. typically is a plant based biomass, more in particular a milled grain.

An embodiment is the biomass composition of the invention or the method of the invention, wherein the biomass composition comprises larvae particles with an average size of between 0,01 mm and 0,9 mm, preferably between 0,02 mm and 0,8 mm, more preferably 0,05 - 0,6 mm, the average particle size determined with ASTM C136/C136M-14 Standard Test Method for Sieve Analysis (version 1 December 2014). An embodiment is the biomass composition of the invention or the method of the invention, wherein the biomass composition or the provided biomass composition also comprises in addition black soldier fly larvae particles, these particles having an average size of 17 mm - 22 mm times 5 mm - 6 mm times 1 mm - 2 mm. The size of such particles is typically measured using conventional (electronic) rulers or calipers.

An embodiment is the method according to the invention, wherein the mixture comprising insects and vegetable biomass of step a. of the method further comprises a liquid such as water, for example a water content of 3% - 75% based on the weight of the mixture of step a. of the method, preferably 4% - 70% water by weight of the biomass composition, more preferably 8% - 60% by weight, most preferably 12% - 50% by weight of the biomass composition. For example, the mixture comprises 42% - 52% moisture based on the total weight of the mixture comprising insects and vegetable biomass of step a. of the method of the invention. Surprisingly, the method is equally applicable for use with a mixture of insects and wetted grain or wetted flour of grain as the vegetable biomass in the mixture of step a., as it is applicable for individual use with a regular dry grain having a typical moisture content of 9% - 14,5% based on the weight of the grain such as dry corn, dry maize, dry barley. That is to say, a mixture of insects at for example an amount of 1% - 5% based on the weight of the mixture, such as about 2%-3%, and one or more ground grains, having a moisture content of 40% - 50%, typically about 45% based on the weight of the mixture, is unencumbered milled with for example a corrugated roller miller with rollers of 100 cm (length) and 25 cm diameter, at a distance 1 mm apart, with fluted corrugations and with a typical roller speed 1 and roller speed 2 of 100 rpm - 300 rpm and 200 rpm - 600 rpm, respectively, typically 250 rpm and 500 rpm respectively. Alternatively, roller speeds of roller 1 and roller 2 are equal, i.e. no speed differential is applied in the method. When rollers made of e.g. steel are applied, adherence of crushed, compressed, cut insects, insect intestine particles, wetted grain, is completely avoided with the method of the invention. Thus, in the method of the invention, provision of a biomass composition comprising a moisture content as high as about 45% by weight of the biomass composition is provided, whereas the corrugated roller miller is designed and suitable for providing dry flour from dry grains such as soft wheat, durum wheat, corn, maize, rye, oats, barley, millet, sorghum, buckwheat, malt, all of which can suitably be part of the mix of step a. of the method, when mixed with e.g. insect larvae and optionally with water to a final moisture content of at least 25% by weight of the mixture.

An embodiment is the method according to the invention, further comprising a step d. following step c., step d. consisting of the drying of the provided biomass composition by e.g. heating, for example by solar heat, blowing (hot) air over and/or through the biomass composition, such that a biomass composition of the invention is provided with a moisture content of less than 45% based on the weight of the biomass composition, preferably less than 30%, more preferably less than 20%, such as 12%-14%, resembling the moisture content of moist grains, e.g. flour of grains of wheat, etc. The biomass composition provided with the method of the invention or the biomass composition of the invention can also provided as dried biomass composition upon lyophilization, freeze-drying, refractive drying, etc., applying drying techniques and apparatuses known in the art.

An embodiment is the method of the invention, wherein in step b. a corrugated roller miller is provided with corrugated rollers positioned at a distance of 1 mm, wherein the two rolls are positioned relative to each other such that the rollers are in sharp to sharp mode. The inventors achieved particular high speeds of milling when a mixture of larvae and a grain is considered and when the throughput is considered, i.e. up to 5,5 tons per hour of biomass composition of the invention. Typically, the weight of larvae particles in the biomass composition provided with the method of the invention, is 1% - 4% by weight of the biomass composition, such as 1,5% - 3%, for example about 2%. Milling in step c. a mixture of such an amount of larvae in e.g. a mixture of two grains, or in a single species of grain, when wetted up to a moisture content of about 45%, provides for a fast and reliable and continuous flow of biomass composition of the invention. When mature larvae of black solder fly are provided as the source of (live and/or dead) insects in step a. of the method, typically and preferably about 80 - 220 of such larvae are present per kg of mixture, wherein the mixture typically comprises 40% - 50% of moisture based on the total weight of the mixture. Such a number of larvae per kg mixture prevents the formation of a tough paste or a sticky dough like composition during milling, which would otherwise hamper the high throughput of biomass composition manufacturing.

An embodiment is the method of the invention, wherein the mixture comprising insects and vegetable biomass comprises 0,5% - 25% insects by weight of the mixture, preferably 1% - 20% by weight, more preferably 1,5%-15% by weight, most preferably 2%-8% by weight, wherein the insects preferably are larvae of black soldier fly. The method allows for the selection of the beneficial combination of insects and vegetable biomass, in terms of high throughput in step c. of the method, without clogging of the space between the corrugated rollers, placed at 0,6 - 1,4 mm distance such as 1 mm. Preferably, the rollers are corrugated rollers such as corrugated fluted rollers, positioned at a distance of 1 mm apart.

An embodiment is the method of the invention, wherein the mixture comprising insects and vegetable biomass of step a. comprises any one or more of particulate insect excrements, insect faeces, insect skin, insect eggs, insect egg shells, insect pupae, insect prepupae, insect imago, adult insect, insect embryo. The method is highly tolerant for implication of any mixture comprising one or more of the listed insect derived or insect based constituents, for milling in step c. This provides a high degree of freedom when the constituents of the biomass composition is considered, which is obtained with the method of the invention. Not only the type and source of insect can be selected based on the desired application of the biomass composition manufactured when working the method of the invention, but also for example the moisture content and the particle size of the ingredients in the mixture of step a. can be adjusted and selected based on the needs that are apparent relating to the intended use of the produced biomass composition. The inventors tested mixtures consisting of a range of mass percentages of black soldier fly larvae in milled grain wetted with water up to a moisture content of about 45% based on the weight of the mixture consisting of insects, water and grain, such as about 1%, 1,5%, 2%, 2,5%, 3%, 4% insects based on the total weight of the mixture. Milling of the mixture with corrugated miller rolls was efficacious and efficient.

An embodiment of the invention is the method, wherein the method encompasses a step e. following step c. or step d., the step e. comprising pasteurization or sterilization of the biomass composition manufactured upon applying the method of the invention with a mixture of insects and a source of biomass such as grains.

In Figure 1, a corrugated roller miller is displayed, that can be suitably applied in step c. of the method of the invention. In Fig. 1A, a cross sectional side view of a corrugated roller miller device 1 configured for milling dry grain (less than 14% moisture based on the weight of the grain) is shown. A supply stream ***a*** of a mixture according to step a. of the method of the invention is provided to the receptacle 12 for receiving biomass stock to be ground through receptacle opening 12a. The receptacle 12 is located above roller pair 19 consisting of rollers 10, 11, the receptacle 12 being a funnel shaped container for receiving stock for the rollers, held in receptacle holder 18. A stream ***b*** of biomass stock 20 is provided to the rollers through opening 13 located in the bottom portion of the container 12. The biomass stock 20 is entering the small passage way of 1 mm between the top side 10a of roller 10, the top side 11a of roller 11, the bottom side 10b of roller 10 and the bottom side 11b of roller 11. Upon turning of roller 10 upon operation of driver axis ***r2*** at a speed of ***n*** rpm in direction ***d2**,* counter clock wise, and upon at the same time turning of roller 11 upon operation of driver axis ***r1*** at a speed of ***n*/*2*** rpm in direction ***d1*** (half speed when compared to the turning speed of axis ***r2***), clock wise. The rollers are placed at a roller gap distance of 1 mm. The milling gap is typically selected between about 0,15 mm and about 3,5 mm, such as 0,2 mm - 3,1 mm, 0,5 mm - 2,7 mm, 0,8 mm - 2,3 mm, about 1 mm, 1,2 mm - 1,9 mm, or about 1,6 mm, although about 1 mm is preferred for high-throughput grinding of the biomass feedstock comprising tough and damage-resistant black soldier fly larvae, typically 9-18 days of age. The milling gap is set at a distance such that larvae are granulated, pressed empty, crushed, minced, therewith efficiently killing and particulating the larvae. The rollers are positioned relatively to each other such that the rollers operate in sharp to sharp modus. The biomass stock 20 is milled (ground) into a flour 21 of the biomass, which flour 21 freely flows upon exerted gravitation at the bottom side 10b, 11b of rollers 10, 11, as a constant stream c of ground biomass 21 through receiving opening 14a of a second container 14 located below the passage way in between the two rollers, and at the bottom side 17 of a casing encompassing the set of rollers. Milled biomass stock 21 is kept and stored in receptacle 14 and the milled/ground biomass stock 21 can be retrieved from the corrugated roller miller device 1 through exit opening 16 located in the bottom portion 14b of receptacle 14, upon operating valve 15 such that a stream ***d*** of particulated biomass stock is obtained. Corrugated roller miller rollers 10 and 11 are surface covered with fluted corrugations with a spiral of 12° for the fluted corrugation.

In Figure 1B, the details of the corrugated fluted rollers of the roller miller device 1 are shown. Front angle alpha (***α***), back angle beta (***β***), pitch ***p***, depth of the grooves ***e***, as well as the sharp top 22 of the corrugations is displayed.

In Figure 1C, a top view of one roller 10, 11 is displayed, showing the roller axis ***r1, r2**,* ridges ***s*** with sharp top 22 of the corrugations, as well as the angle delta (***δ***) indicating the spiral of 12° for the fluted corrugations ***s***.

In Figure 1D, a corrugated roller miller is displayed, that can be suitably applied in step c. of the method of the invention. In Fig. 1D, a cross sectional side view of a corrugated roller miller device 1 configured for milling dry grain (less than 14% moisture based on the weight of the grain) is shown. A supply stream ***a*** of a mixture according to step a. of the method of the invention is provided to the receptacle 12 for receiving biomass stock to be ground through receptacle opening 12a. The receptacle 12 is located above roller pair 19 consisting of rollers 10', 11', the receptacle 12 being a funnel shaped container for receiving stock for the rollers, held in receptacle holder 18. A stream ***b*** of biomass stock 20 is provided to the rollers through opening 13 located in the bottom portion of the container 12. The biomass stock 20 is entering the small passage way of 1 mm between the top side 10a of roller 10', the top side 11a of roller 11', the bottom side 10b of roller 10' and the bottom side 11b of roller 11'. Upon turning of roller 10' upon operation of driver axis ***r2*** at a speed of ***n*** rpm in direction ***d2,*** counter clock wise, and upon at the same time turning of roller 11' upon operation of driver axis ***r1*** at the same speed of ***n*** rpm in direction ***d1*** (no speed differential applied when compared to the turning speed of axis ***r2***), clock wise. The rollers are placed at a roller gap distance of 1 mm. The rollers are positioned relatively to each other such that the rollers operate in sharp to sharp modus. The biomass stock 20 is milled (ground) into a flour 21 of the biomass, which flour 21 freely flows upon exerted gravitation at the bottom side 10b, 11b of rollers 10', 11', as a constant stream ***c*** of ground biomass 21 through receiving opening 14a of a second container 14 located below the passage way in between the two rollers, and at the bottom side 17 of a casing encompassing the set of rollers. Milled biomass stock 21 is kept and stored in receptacle 14 and the milled/ground biomass stock 21 can be retrieved from the corrugated roller miller device 1 through exit opening 16 located in the bottom portion 14b of receptacle 14, upon operating valve 15 such that a stream ***d*** of particulated biomass stock is obtained. Corrugated roller miller rollers 10' and 11' are surface covered with fluted corrugations with a spiral of 0° for the fluted corrugation (Fig. 1F). The flutes (corrugations) 22' of the two rollers comprise teeth (when the cross-sectional representation in Fig. 1E is considered) having a symmetrical cross-section with essentially the same cutting angle α and back angle α at both sides of the peaks of the flutes, relative to the vertical at the roller surface.

For the application in the method of the invention, the corrugated rollers of the roller mill applied are typically cast iron chilled rolls, such as alloyed or unalloyed cast iron, or tungsten carbide corrugated rollers, or chrome plated or chrome steel corrugated rollers, and iron rollers are preferred. The roller surface is typically fluted with grooves which supports the cutting and shearing forces of the mill. The grinding in between the two opposite rollers relates to shear and compressive forces exerted to material fed to the mill. Typically, the roller diameter is 225 - 300 mm, and about 250 mm is preferred. The length of the rollers is typically 1000 - 2000 mm, although shorter and longer rollers are also applicable. Typically, the speed differential is 1:1 (no difference in roller speeds) or is 1:2 (the second roller rolls with twice the speed of the first roller). The roller speeds (circumferential velocity of the rollers) are typically between 30 rpm and 1000 rpm, such as 90 rpm - 850 rpm, 150 rpm - 500 rpm, or 250 rpm - 350 rpm. The speed differential of larger than 1:1 supports the building up of shear stress exerted onto material between the rollers.

For the method of the invention, a corrugated roller mill optionally comprises the casing 18 covering the rollers, optionally comprises the feedstock supply container 12, optionally comprises the container 14 for receiving ground biomass composition; basically, for the method of the invention a corrugated roller mill comprises a set of rollers and an opening above the rollers for receiving biomass feedstock comprising live and dead larvae and an opening below the rollers for dispensing the biomass composition of the invention.

Optionally, additives are added to the feedstock stream ***a*** or ***b***, before the feedstock is ground by the corrugated roller mill, such that the biomass composition obtained with the method of the invention comprises the additives. Such additives are typically one or more additives selected from a plant growth additive, soil-adjustment additive, extender and/or seed protection additive selected from: bio-stimulants such as humic acid, fulvic acid, nitrogen containing compounds, inorganic compounds, acetic acid, seaweed extracts, botanicals, chitosan, biopolymers, fungi, bacteria, organic or synthetic fertilizers, biocontrol agents, pesticides, i.e. herbicides, fungicides and insecticides, a pH-modifier, a UV-stabiliser, lactic acid, an absorbent polymer such as silica, bentonite and super absorbing polymer, calcium carbonate, talcum.

Optionally, and alternatively or additively, additives are added to the stream ***c*** of biomass composition of the invention, after feedstock is ground by the corrugated roller mill, such that the biomass composition obtained with the method of the invention comprises the additives. Such additives are typically one or more additives selected from a plant growth additive, soil-adjustment additive, extender and/or seed protection additive selected from: bio-stimulants such as humic acid, fulvic acid, nitrogen containing compounds, inorganic compounds, acetic acid, seaweed extracts, botanicals, chitosan, biopolymers, fungi, bacteria, organic or synthetic fertilizers, biocontrol agents, pesticides, i.e. herbicides, fungicides and insecticides, a pH-modifier, a UV-stabiliser, lactic acid, an absorbent polymer such as silica, bentonite and super absorbing polymer, calcium carbonate, talcum. Alternatively, such additives are added after an optional drying step subjected to the biomass composition, and/or the additives are added to the biomass composition shortly before use, to the stream ***d*** of biomass composition, such as after storage of biomass composition in a container, e.g. locally at a farm or near a power plant, etc. This is typically suitable when additives are more susceptible to e.g. degradation, microbial overgrowth, etc., i.e. have a shorter shelf live, than the non-dried or dried biomass composition obtained with the method of the invention.

An embodiment of the invention is the method of the invention, wherein the mixture comprising insects and vegetable biomass further comprises a liquid such as water at an amount of 0,5% - 60% based on the weight of the biomass composition, preferably 1% - 40% water by weight of the biomass composition, more preferably 2% - 30% by weight, most preferably 3% - 20% by weight.

An embodiment is the method of the invention, wherein the mixture comprising insects and vegetable biomass further comprises a liquid such as water at an amount of 10% - 60% water based on the weight of the biomass composition or 10% - 65% by weight, more preferably 20% - 50% by weight, most preferably 30% - 45% by weight. An embodiment is the method of the invention, wherein the mixture comprising insects and vegetable biomass further comprises a liquid such as water at an amount of 10% - 60% water based on the weight of the mixture comprising insects and vegetable biomass or 10% - 65% by weight, more preferably 20% - 50% by weight, most preferably 30% - 45% by weight. Typically, the liquid is water. Typically, the water content is 10% - 65% by weight based on the weight of the biomass composition or the mixture comprising insects and vegetable biomass (which is essentially the same).

An embodiment is the method of the invention, wherein the mixture comprising insects and vegetable biomass has a dry matter content of 20% - 99% by weight of the biomass composition, preferably 25% - 97% by weight, more preferably 30% - 95% by weight, most preferably 35% - 90% by weight. An embodiment is the method of the invention, wherein the mixture comprising insects and vegetable biomass has a dry matter content of 20% - 99% by weight of the mixture comprising insects and vegetable biomass, preferably 25% - 97% by weight, more preferably 30% - 95% by weight, most preferably 35% - 90% by weight.

An embodiment is the method of the invention, wherein the mixture comprising insects and vegetable biomass comprises 0,5% - 25% insects by weight of the mixture, preferably 1% - 20% by weight, more preferably 2%-15% by weight, most preferably 3%-10% by weight, wherein the insects preferably are larvae of black soldier fly, such as black soldier fly larvae 10-20 days of age post-hatching. Typically, the black soldier fly larvae are at an age and stage of development between 0,5 day and 2 days before pupation. Thus, larvae that were previously reared, then kept cool (e.g. at a temperature of 2°C - 12°C) for a certain time, and then again warmed up to a temperature of 29°C - 36°C, are also applicable for subjecting the larvae to the method of the invention and/or for provision of the biomass composition, although the age of the larvae in days may exceed the indicated 10-20 days with the number of days at which such larvae were kept in a hibernated state at lowered temperature.

The biomass composition obtained or obtainable with the method of the invention and the biomass composition of the invention is thus for example provided as dried biomass composition. Such a dried biomass composition is suitable for packaging, storing in a bulk container, for example at a farm or at the premises of a power plant, and dried biomaterial composition may have an improved shelf live when stock piling due to the lower moisture content and due to the sterilizing activity of the drying techniques applicable. Typically, dried biomass composition of the invention or dried biomass composition obtained with the method of the invention is a powder or is provided as granules.

The biomass composition obtained or obtainable with the method of the invention and the biomass composition of the invention is for example suitable for application as a source of feed or as a source of a feed ingredient or feed supplement, for example for feeding poultry, pigs, insect larvae such as larvae of black soldier fly.

Typically, the method of the invention provides 1 ton - 100 ton biomass composition per hour, preferably 2-50 ton per hour, more preferably 3-30 ton per hour, most preferably 4 - 20 ton per hour.

An aspect of the invention is a biomass composition obtainable with the method of the invention or a biomass composition obtained with the method of the invention. The method of the invention results in a manufacturing of a biomass composition suitably applied in agriculture, horticulture, etc., and even in rearing of the very same insects, such as larvae, that were applied in the mixture of step a. according to the method of the invention. Even when living insects are subjected to the milling process step c. of the method, such as living larvae such as mature black soldier fly larvae, these renown tough and hard larvae are crushed, their intestine pressed out of the remaining carcasses, therewith providing particulate insects, therewith providing a quick and reliable method for killing larvae of black soldier fly, which are otherwise very hard to kill. Applying the method with a mixture of feed substrate of milled grain comprising about 45% moisture based on the weight of the mixture and comprising about 2% black soldier fly larvae based on the weight of the mixture (or about 100 - 150 larvae per kg of the moisturized feed substrate), provided in step c. a biomass composition that comprises high value with regard to nutritional value, when use of the biomass composition as e.g. feed ingredient is considered, with regard to energy value, when use of the biomass composition as fuel for a power plant is considered, with regard to caloric value when production of biofuel from the biomass composition is considered. Moreover, the inventors established that by application of the 100 cm long (25 cm diameter) corrugated roller miller, live larvae such as black soldier fly larvae are highly efficiently killed such that the survival rate after step c. of the method is 0,0% Beneficially, herewith applying the method of the invention results in manufacturing of a product suitable for numerous applications, and thus turning troublesome waste consisting of feed stock, carcasses, living animals, into high value end-product or high value raw material for livestock industry, industrial scale insect farming, fertilization needs in any of forestry, agriculture, horticulture, fueling of power plants, production of methane, diesel, ethanol. For several applications, the drying step d. of the method of the invention is beneficially applied, such that a dry biomass composition of the invention is provided.

Thus, an aspect of the invention relates to the use of the biomass composition according to the invention in the production of a feed, a feed stuff, a feed ingredient, a biofuel such as biogas, biodiesel, bioethanol, a fertilizer, an ingredient for a fertilizer, a construction material, a biomass comprising fuel for fueling a power plant.

Accordingly, an aspect of the invention relates to a biomass-comprising fuel for fueling a power plant, comprising the biomass composition according to the invention.

An aspect of the invention relates to a fertilizer comprising the biomass composition according to the invention.

An embodiment is the fertilizer according to the invention, wherein the fertilizer further comprises any one or more of an additive selected from a plant growth additive, soil-adjustment additive, extender and/or seed protection additive selected from: bio-stimulants such as humic acid, fulvic acid, nitrogen containing compounds, inorganic compounds, acetic acid, seaweed extracts, botanicals, chitosan, biopolymers, fungi, bacteria, organic or synthetic fertilizers, biocontrol agents, pesticides, i.e. herbicides, fungicides and insecticides, a pH-modifier, a UV-stabiliser, lactic acid, an absorbent polymer such as silica, bentonite and super absorbing polymer, calcium carbonate, talcum.

A further aspect of the invention relates to a feed or feed ingredient comprising the biomass composition according to the invention.

An embodiment is the feed or feed ingredient of the invention, further supplemented with any one or more of a mineral, an antibiotic, a medicine, a vitamin, an enzyme, a preservative, water, etc.

An embodiment is the feed or feed ingredient according to the invention, wherein the feed or feed ingredient is suitable as a feedstock for rearing of insects, such as larvae, preferably black soldier fly larvae. Application of the method of the invention is suitable for providing a biomass composition comprising insect particles or worm particles and a vegetable biomass, wherein the source of insect particles is e.g. black soldier fly larvae. More in general the biomass of the invention suitably comprises particulate fragments of an arthropod as the source of the insect particles in the biomass. Typically, the biomass of the invention comprises particles derived from any of the species Lacewings (e.g. *Chrysoperla carnea*), e.g. larvae or eggs thereof; Coccinelid beetles (e.g. *Cryptolaemus montrouzien*), e.g. larvae or eggs thereof; predatory bugs (e.g. *Macrolophus pygmaeus*), e.g. eggs or nymphs, flightless nymphs thereof; pollinators such as the onion fly, *Delia antiqua;* predatory beetles such as the greenhouse rove beetle, *Dalotia coriaria*); and terrestrial fly species, e.g. eggs or larvae thereof. Where appropriate, throughout the specification, and in the claims, the term 'insects' can be read as `arthropods', covering for example flies, such as the black soldier fly, more in particular the (neonate or late-stage larvae post pupation) larvae of the black soldier fly, unless it is clear from the context that specifically insects according to the common definition are referred to. It is appreciated by the skilled person that the biomass of the invention can also suitably comprise fragments or particles of other species such as worms, unrelated to the larval form of arthropods, e.g. insects.

The present invention is described with respect to particular embodiments but the invention is not limited thereto but only by the claims.

The embodiments of the invention described herein can operate in combination and cooperation, unless specified otherwise.

While the invention has been described in terms of several embodiments, it is contemplated that alternatives, modifications, permutations and equivalents thereof will become apparent to one having ordinary skill in the art upon reading the specification and upon study of the drawings. The invention is not limited in any way to the illustrated embodiments. Changes can be made without departing from the scope which is defined by the appended claims. Examples are described here above that illustrate certain embodiments of the invention. They are not intended in any way to limit the scope of the invention.

### EXAMPLES

### Example 1

### Embodiment of the invention

First, providing biomass composition according to the invention with the use of a manure screw press or of a meat mincer, turned out to be impossible, due to full clogging of the machines applied and sticking of inadequately particulated insects (See Examples 2 and 3, hereunder). These failures came as a surprise in light of the resemblance between the mixtures comprising insects and a vegetable biomass and the products regularly processed with the manure screw press or the meat mincer.

A roller miller was applied for milling and grinding a mixture of milled grain, 2% larvae of black soldier fly (about 100-150 larvae per kg of the mixture) based on the weight of the mixture, and 45% water based on the weight of the mixture.

The roller miller was a miller with corrugated fluted rollers (Crumbler/Cracker DFZL-1000, Bühler). The length of the two rollers was 1000 mm. The diameter of the rollers was 25 cm. The roll gap was set to 1 mm. The throughput was 5,5 tons per hour. The roller speed was set to 250 rpm and 500 rpm for the two rollers individually. The spiral of the flute was 12%.

During operation, no clogging of the interspace between the two rollers was observed. The throughput remained constant overtime of the run. The ground mixture of water, feed substrate and live larvae and dead larvae and larvae skins was presented as a uniform biomass composition of constant quality during the extent of the run (hours), comprising the grain flour, particulate larvae ghosts (bodies with intestine pushed out), particulate intestine, particulate insect skin (fragments).

Surprisingly, operating the corrugated roller miller designed for milling grains as dry as having 86% or more dry mass content, based on the weight of the grains, with the mixture comprising insects and milled grains and a relatively high moisture content of 45% based on the weight of the mixture, provided for a continuous uninterrupted stream of finely particulated insect and grain flour.

The corrugated roller miller was operated in the sharp to sharp modus with one pair of rollers. The roll gap was kept constant at 1 mm, and the two roller speeds were also kept constant during the run lasting for hours and providing up to 5,5 tons biomass composition of the invention per hour. No surviving live larvae were detected in the manufactured biomass composition.

### Example 2

### Comparative example I, not part of the invention

In view of the relatively high moisture content of the mixture tested in Example 1, an earlier approach was attempted, using the application of a meat mincer, commercially available. Meat typically has a moisture content of 56%-73% based on the weight of the meat. Therefore, the inventors hypothesized that subjecting the mixture as detailed in Example 1 to a mincing step by applying a conventional meat mincer would result in efficient killing of live black soldier fly larvae comprised in the wet feed substrate, and would provide a homogenous paste of minced larvae and the flour grain.

However, before a batch of biomass composition could be manufactured properly upon application of the meat mincer, the machine stopped operating due to jamming of the screw press comprised by the meat mincer. A smear of insufficiently minced larvae in feed substrate was observed at the surface of the screw press, hampering proper operation.

Therefore, providing of biomass composition according to the invention upon applying the meat mincer technology failed. It was concluded that due to the sticky nature of crushed, cut, minced, damaged larvae of black soldier fly, the interior of the meat mincer became fully blocked with the tough insect remains, preventing the machine from continuously outputting something resembling the biomass composition of the invention.

Application of the meat mincer for providing a biomass composition of the invention was thus impossible. Based on the results and the failure, the inventors assumed that the relatively low dry mass % relative to the total weight of the biomass feed stock subjected to mincing was too low for proper operation of the meat mincer.

### Example 3

### Comparative example II, not part of the invention

In view of the relatively high moisture content of the mixture tested in Example 1, an earlier approach was attempted, using the application of a manure screw press, commercially available. Such a manure screw press is typically operating with manure which typically has a moisture content of at least 70% based on the weight of the manure. Therefore, the inventors hypothesized that subjecting the mixture as detailed in Example 1 to a screw press step by applying a conventional manure screw press would result in efficient killing of live black soldier fly larvae comprised in the wet feed substrate, and would provide a homogenous paste of pressed larvae and the flour grain.

However, before a batch of biomass composition could be manufactured properly upon application of the manure screw press, the machine stopped operating due to jamming of the screw rolls comprised by the manure screw press. A smear of insufficiently pressed larvae in feed substrate was observed at the surface of the rolls of the manure screw press, hampering proper further operation.

Therefore, providing of biomass composition according to the invention upon applying the manure screw press technology failed. It was concluded that due to the sticky nature of crushed, cut, minced, suppressed, damaged larvae of black soldier fly, the manure screw press became fully blocked with the tough insect remains, preventing the machine from continuously outputting something resembling the biomass composition of the invention.

Application of the manure screw press for providing a biomass composition of the invention was thus impossible. Based on the results and the failure, the inventors assumed that the relatively low dry mass % relative to the total weight of the biomass feed stock subjected to screw pressing was too low for proper operation of the manure screw press.

### Example 4

### Comparative example III, not part of the invention

In view of the presence of grain particles in the biomass mixture tested in Example 1, an earlier approach was attempted, using the application of a pelletizer, commercially available (Kahl, type 33-390). Such a pelletizer comprising rolls is typically operating with powders which typically have a relatively low moisture content. The inventors hypothesized that subjecting the mixture as detailed in Example 1 to a pelleting press step by applying a conventional pelletizer would result in efficient killing of live black soldier fly larvae comprised in the wet feed substrate, and would provide a homogenous paste of pressed larvae and the flour grain.

However, before a batch of biomass composition could be manufactured properly upon application of the pelleting press, the machine stopped operating due to jamming of the pelleting rolls comprised by the pelleting press. A smear of insufficiently pressed larvae in feed substrate was observed at the surface of the rolls of the pelleting press, hampering proper further operation.

Therefore, providing of biomass composition according to the invention upon applying the pelleting press technology failed. It was concluded that due to the sticky nature of crushed, cut, minced, suppressed, damaged larvae of black soldier fly, the pelleting press became fully blocked with the tough and tacky insect remains, preventing the machine from continuously outputting something resembling the biomass composition of the invention.

Application of the pelleting press in the method of the invention for providing a biomass composition of the invention was thus impossible. Based on the results and the failure, the inventors assumed that the relatively low dry mass % relative to the total weight of the biomass feed stock subjected to pressing was too low for proper operation of the pelleting press.

### Example 5

### Comparative example IV, not part of the invention

In view of the presence of grain in the biomass mixture tested in Example 1, an earlier approach was attempted, using the application of a multi-cracker apparatus, commercially available (AgriCracker, type AC200). Such a cracker comprising two lines of circular blade knives positioned opposite to each other with the sharp edges of the blades pointing towards the axis of the opposite row, is typically operating with grains, beans, seeds which typically have a relatively low moisture content. The inventors hypothesized that subjecting the mixture as detailed in Example 1 to a cracker step by applying a conventional cracker would result in efficient killing of live black soldier fly larvae comprised in the wet feed substrate comprising grain, and would provide a homogenous paste of pressed larvae and the flour grain.

However, before a batch of biomass composition could be manufactured properly upon application of the multi-cracker, the machine stopped operating due to jamming of the cracking blades comprised by the cracker. A smear of insufficiently pressed larvae in feed substrate was observed at the surface of the blades of the cracker, hampering proper further operation.

Therefore, providing of biomass composition according to the invention upon applying the cracker technology failed. It was concluded that due to the sticky nature of crushed, cut, minced, suppressed, damaged larvae of black soldier fly, the multi-cracker became fully blocked with the tough and tacky insect remains, preventing the machine from continuously outputting something resembling the biomass composition of the invention.

Application of the multi-cracker in the method of the invention for providing a biomass composition of the invention was thus impossible. Based on the results and the failure, the inventors assumed that the relatively low dry mass % relative to the total weight of the biomass feed stock subjected to cracking was too low for proper operation of the cracker.

### Example 6

### Comparative example V, not part of the invention

In view of the presence of very damage-resistant larvae in the biomass mixture tested in Example 1, an earlier approach was attempted, using the application of a roller crusher apparatus, commercially available (Bongers, the Netherlands) and applied for crushing materials such as stone and coal. Such a roller crusher comprising two rollers provided with protrusions and positioned opposite to each other with the protrusions at the roller surfaces pointing towards the opposite roller, is typically operating with relatively hard materials which typically have a relatively low moisture content. The inventors hypothesized that subjecting the mixture as detailed in Example 1 to a crushing step by applying a conventional crusher would result in efficient partitioning and tearing apart and pressing and killing of live black soldier fly larvae comprised in the wet feed substrate comprising grain, and would provide a homogenous paste of pressed and dead larvae and the flour grain.

However, before a batch of biomass composition could be manufactured properly upon application of the crusher, the machine stopped operating due to jamming of the rollers comprised by the crusher. A smear of insufficiently pressed larvae in feed substrate was observed at the surface of the rollers of the crusher, hampering proper further operation.

Therefore, providing of biomass composition according to the invention upon applying the crushing technology failed. It was concluded that due to the sticky nature of crushed, cut, minced, suppressed, damaged larvae of black soldier fly, the crusher became fully blocked with the tough and tacky insect remains, preventing the machine from continuously outputting something resembling the biomass composition of the invention.

Application of the stone crusher in the method of the invention for providing a biomass composition of the invention was thus impossible. Based on the results and the failure, the inventors assumed that the relatively low dry mass % relative to the total weight of the biomass feed stock subjected to crushing was too low for proper operation of the crusher.

### Example 7

### Comparative example VI, not part of the invention

In view of the presence of highly moisturized and very damage-resistant larvae in the biomass mixture tested in Example 1, an earlier approach was attempted, using the application of a pin milling apparatus, commercially available and applied for milling materials comprising a relatively high moisture content such as food products and agricultural products. Pin milling is a means of grinding, sizing, deagglomerating and/or homogenizing. Pin milling is applied for a broad range of food, chemical, pharmaceutical, nutraceutical, mineral and agricultural products - including pulverizing of insects, eggs and larvae in flour applications - in tight size ranges from coarse to 400 mesh. Such a pin mill comprising two blades or discs provided with pins and positioned opposite to each other with the pins at the blades pointing towards the opposite blade surface, is typically operating with both relatively dry materials and relatively moisturized materials. The inventors hypothesized that subjecting the mixture as detailed in Example 1 to a pin milling step by applying a conventional pin mill would result in efficient partitioning and tearing apart and pressing and killing of live black soldier fly larvae comprised in the wet feed substrate comprising grain, and would provide a homogenous paste of pressed and dead larvae and the flour grain. The more, since the pin mill technique is advertised as being suitable for crunching larvae.

However, before a batch of biomass composition could be manufactured properly upon application of the pin mill, the machine stopped operating due to jamming of the blades provided with the pins comprised by the pin mill. A smear of insufficiently cut larvae in feed substrate was observed at the surface of the discs of the pin mill and adhered to the pins, hampering proper further operation.

Therefore, providing of biomass composition according to the invention upon applying the pin milling technology failed. It was concluded that due to the sticky nature of ground and milled and damaged larvae of black soldier fly, the pin mill became fully blocked with the tough and tacky insect remains, preventing the machine from continuously outputting something resembling the biomass composition of the invention.

Application of the pin mill in the method of the invention for providing a biomass composition of the invention was thus impossible. Based on the results and the failure, the inventors assumed that the relatively low dry mass % relative to the total weight of the biomass feed stock subjected to pin milling was too low for proper operation of the pin mill.

## Claims

1. Particulated biomass composition comprising insect particles or worm particles and a vegetable biomass and a liquid such as water.

2. Particulated biomass composition of claim 1, wherein the vegetable biomass is one or more of a grain or a constituent thereof, a tuber of a root vegetable or parts or a constituent thereof, wood such as saw dust, shredded branches, a fruit, a vegetable, a crop, a plant, or a fragment, constituent or part thereof.

3. Particulated biomass composition according to any one of the claims 1-3, wherein the insect particles have an average particle size of between 0,1 mm and 4 mm, preferably 0,2 mm - 2 mm, more preferably 0,5 - 1 mm, the average particle size determined with ASTM C136/C136M-14 Standard Test Method for Sieve Analysis.

4. Particulated biomass composition according to any one of the claims 1-3, wherein the insect particles have an average particle size of between 3 mm and 40 mm, preferably 5 mm - 30 mm, more preferably 8 - 20 mm, or an average particle size of 10 mm - 40 mm times 3 mm - 10 mm times 0,4 mm - 4 mm.

5. Particulated biomass composition according to any one of the claims 1-3 or 4, wherein the insect particles comprised by the biomass composition comprise or consist of black soldier fly larvae particles, these particles having an average size of 17 mm - 22 mm times 5 mm - 6 mm times 1 mm - 2 mm.

6. Particulated biomass composition according to any one of the claims 1-5, wherein the vegetable biomass comprises milled grain, particulate grain or grain flour, with an average particle size of between 0,1 mm and 4 mm, preferably 0,2 mm - 2 mm, more preferably 0,5 -1 mm, the average particle size determined with ASTM C136/C136M-14 Standard Test Method for Sieve Analysis, and/or wherein the vegetable biomass comprises parts of a tuber of a root vegetable according to claim 4, with an average particle size of between 0,1 mm and 4 mm, preferably 0,2 mm - 2 mm, more preferably 0,5 - 1 mm, the average particle size determined with ASTM C136/C136M-14 Standard Test Method for Sieve Analysis.

7. Particulated biomass composition according to any one of the claims 1-6, wherein the biomass composition further comprises a liquid such as water at an amount of 0,5% - 70% based on the weight of the biomass composition, preferably 1% - 65% water by weight of the biomass composition, more preferably 2% - 30% by weight, most preferably 3% - 20% by weight, such as 5% - 70% and 10% - 65%.

8. Particulated biomass composition according to any one of the claims 1-7, wherein the biomass composition further comprises a liquid such as water, preferably 10% - 60% water by weight of the biomass composition or 10% - 65% by weight, more preferably 20% - 50% by weight, most preferably 30% - 45% by weight.

9. Particulated biomass composition according to any one of the claims 1-8, wherein the biomass composition has a dry matter content of 20% - 99% by weight of the biomass composition, preferably 25% - 97% by weight, more preferably 30% - 95% by weight, most preferably 35% - 90% by weight.

10. Particulated biomass composition according to any one of the claims 1-9, wherein the insect is an insect larvae, such as a larvae of black soldier fly, such as black soldier fly larvae 10-20 days of age post-hatching.

11. Particulated biomass composition according to any one of the claims 1-10, wherein the biomass composition comprises any one or more of particulate insect excrements, insect faeces, insect skin, insect eggs, insect egg shells, insect pupae, insect prepupae, insect imago, adult insect, insect embryo.

12. Particulated biomass composition according to any one of the claims 1-11, wherein the biomass composition comprises 0,01% - 25% insects by weight of the biomass composition, preferably 1% - 20% by weight, more preferably 2%-15% by weight, most preferably 3%-10% by weight, wherein the insects preferably are larvae of black soldier fly.

13. Use of the particulated biomass composition according to any one of the claims 1-12 in the production of a feed, a feed stuff, a feed ingredient, a biofuel such as biogas, biodiesel, bioethanol, a fertilizer, an ingredient for a fertilizer, a construction material, a biomass comprising fuel for fueling a power plant.

14. A particulated biomass comprising fuel for fueling a power plant, comprising the biomass composition according to any one of the claims 1-12.

15. Fertilizer comprising the particulated biomass composition according to any one of the claims 1-12.

16. Feed or feed ingredient comprising the particulated biomass composition according to any one of the claims 1-12, optionally said feed or feed ingredient is suitable as a feedstock for rearing of insects, such as larvae, preferably black soldier fly larvae.
